# EUROPEAN PATENT SPECIFICATION

(11) **EP 3 232 580 B1**
(45) Date of publication and mention of the grant of the patent: **30.12.2020**
(21) Application number: 15866742.8
(22) Date of filing: 12.02.2015
(51) Int. Cl.: H04B 5/00, H01Q 7/00, H01Q 1/24, G06F 3/041, H01Q 1/44, G06F 3/047, H01Q 1/22

(54) **TOUCH SCREEN INTEGRATED WITH NFC ANTENNA, TERMINAL, AND NEAR FIELD COMMUNICATION METHOD THEREFOR**
BERÜHRUNGSBILDSCHIRM MIT INTEGRIERTER NFC-ANTENNE, ENDVORRICHTUNG UND NAHFELDKOMMUNIKATIONSVERFAHREN DAFÜR
ÉCRAN TACTILE INTÉGRÉ AYANT UNE ANTENNE NFC, TERMINAL ET SON PROCÉDÉ DE COMMUNICATION EN CHAMP PROCHE

(30) Priority: 09.12.2014 CN 201410746166
(43) Date of publication of application: 18.10.2017
(73) Proprietor: Shenzhen Goodix Technology Co., Ltd., Shenzhen, Guangdong 518045 (CN)
(72) Inventor: QUE, Bincheng, Shenzhen Guangdong 518000 (CN); YE, Jinchun, Shenzhen Guangdong 518000 (CN); DENG, Gengchun, Shenzhen Guangdong 518000 (CN)
(74) Representative: Vinsome, Rex Martin
(86) International application number: PCT/CN2015/072822
(87) International publication number: WO 2016/090753

(56) References cited:
- EP-A2- 2 087 609
- EP-A9- 2 620 845
- WO-A1-02/071536
- CN-A- 102 819 346
- CN-A- 103 904 411
- CN-A- 103 904 412
- US-A1- 2012 309 310
- US-A1- 2013 015 938
- US-A1- 2013 207 925
- US-A1- 2013 293 333
- US-A1- 2013 341 409
- US-A1- 2014 176 371
- US-A1- 2014 187 153
- US-B2- 8 718 553
- US-B2- 8 725 088

## Description

### TECHNICAL FIELD

The present invention relates to the technical field of near field communication, NFC, and in particular, relates to an NFC antenna-integrated touch screen, a terminal and a near field communication method thereof.

### BACKGROUND

Near field communication (NFC) is a technology which implements non-contact identification and interconnection, which employs 13.56 MHz near field magnetic field communication mode and implements short-range wireless communication between mobile terminals or devices, consumable electronic products, PCs and smart control tools. This allows users to exchange information, and access contents and services simply and visually. Therefore, the NFC technology is an indispensable technology in the future electric products, and has a huge market potential.

Currently, touch screens of most mobile phones are integrated with the NFC function. However, the antenna of the conventional NFC product is mainly disposed on a face of the battery or attached inside the shell. Generally, coils are formed by means of metal wiring on a PCB, and then the PCB or FPC having the coils is attached on the shell or the battery. The disadvantages lie in that the battery and the shell generally need to be repeatedly disassembled or assembled, such that the junction of the NFC antenna tends to be damaged or tends to be misaligned, which finally causing poor antenna signals and affecting use of the NFC function. In addition, the antenna of a NFC product is generally disposed inside the shell of the electronic product. If the shell is made from a metal material, the propagation of an NFC signal may be affected. Therefore, some limitations are caused to selection of materials of the shell of the electronic product.

Accordingly, such deployment of the NFC antenna is not reasonable, and the junction thereof tends to be damaged or tends to be not aligned. As a result, antenna signals become poor, and selection of materials of the shell of the electronic product is subjected to limitations. To solve the technical problem, the Chinese patent application titled with NFC antenna-integrated touch screen, with the publication number CN 102819346 A, discloses a touch screen integrated with an NFC antenna, wherein the NFC antenna is disposed on the touch screen and connected to a control board with a control chip, which integrating the touch control function and the NFC antenna function. Since the touch screen is a undetachable component in operation, during the use of an NFC antenna, problem such as poor signals, junction failures and the like , which might otherwise exist due to the interface abrasion and non-alignment, may be prevented, and this is also good for signal reception and transmission of the antenna, to ensure smooth communication. In addition, the touch screen integrated with the NFC antenna provides a solution for practice the scenario where the NFC signals are more conveniently received from the touch surface of the touch screen, or the NFC signal must be received from the touch surface of the touch screen. Furthermore, the electronic product equipped with the above touch screen transfers signals through the touch surface, thus it is not subjected to limitations caused by the NFC antenna when selecting materials of the shell.

Although the above patent application may prevent some of the problems of the electronic product integrated with the NFC function, other problems may also be caused. For example, the NFC antenna has multiple turns of coils fabricated by using the conductive wires in a wiring manner, which inevitably unfavorable to the process of the narrow frame screen.

US 2013/015938 A1 discloses a near field communication antenna device of a mobile terminal having a near field communication antenna function of 13.56 MHz by Alternating Current (AC) coupling a conductive pattern of a touch screen panel. The device includes a conductive pattern formed in a touch screen panel, a first antenna line AC-coupled to one end of the conductive pattern, a second antenna line AC-coupled to the other end of the conductive pattern, and a near field communication module connected to the first antenna line and the second antenna line.

US 2013/207925 A1 discloses a multi-purpose stylus antenna, including a processing device comprising a switch, an antenna circuit, and a capacitance sensor. The switch is configured to couple a conductive element between the antenna circuit and the capacitance sensor. The processing device is configured to communicate data to or from a stylus when the switch is coupled to the antenna circuit and to measure capacitance associated with the conductive element when the switch is coupled to the capacitance sensor.

WO 02/071536 A1 discloses a parasitic antenna element used with a wireless communication device that includes a housing, communication circuitry, and a first antenna element for intercepting electromagnetic energy and further for coupling electromagnetic energy intercepted by the parasitic antenna element to the communication circuitry. The parasitic antenna element includes a dielectric substrate; and a conductive pattern disposed on a surface of the dielectric substrate, whereby when the dielectric substrate is attached to the housing in close proximity to the internal antenna element, electromagnetic energy is coupled between the internal antenna element and the conductive pattern.

US 2014/187153 A1 discloses a mobile wireless communications device including a near-field communications (NFC) transceiver, NFC antennas and an NFC control circuit. The NFC transceiver generates a received signal strength based on a received signal from an adjacent NFC device. The NFC control circuit includes an antenna switch circuit coupled between the NFC transceiver and the NFC antennas. A capacitance sensing circuit is coupled to the NFC antennas to determine capacitance values thereof. A processor operates the antenna switch circuit based upon the received signal strength and the capacitance values.

US2013/341409 A1 discloses a multi-function Radio-Frequency device integrated into a computer system which includes a substrate includ-ing a first surface and a second surface opposite to each other, a touchpad area disposed on the first surface of the substrate for generating a touch signal according to a touch situation, an antenna disposed on the first surface and/or the second sur-face of the substrate for receiving and transmitting a Radio-Frequency signal, and a control module disposed on the sec-ond surface of the substrate and coupled to the touchpad area and the ante1ma for generating a touch control signal accord-ing to the touch signal and generating an identification signal according to the Radio-Frequency signal to the computer system.

EP2087609A2 discloses a near field RF communicator which has an antenna circuit to receive a modulated radio frequency signal by inductive coupling and demodulation circuitry to extract the modulation from a received modulated radio frequency signal inductively coupled to the antenna circuit. The demodulation circuitry has a virtual earth input comprising a current mirror. The demodulation circuitry may be formed by an amplifier and a demodulator coupled to an output of the amplifier. The amplifier may be a single input amplifier coupled to an output of the antenna circuit or may be a differential amplifier having first and second inputs to receive the modulated radio frequency signal from first and second outputs of the antenna circuit with each amplifier input providing a virtual earth input.

US8725088B2 discloses a single-antenna solution for near-field and far-field communication in wireless devices. In an embodiment, a first transceiver block generates a first transmit signal to be transmitted using radiative techniques. A second transceiver block generates a second transmit signal to be transmitted using inductive coupling. The first and second transceiver blocks are coupled to a same antenna for transmitting the first transmit signal using radiative coupling, and the second transmit signal using inductive coupling. The first transceiver block and the second transceiver block operate according to time division multiplexing, and in an embodiment corresponding to an FM transceiver and an NFC transceiver.

US 2012/0309310 A1 discloses an apparatus comprising a display component comprising at least one display part and an electrically conductive part electrically isolated from the at least one display part.

US 2013/0293333 A1 discloses discontinuous loop antennas and related components, radio-frequency identification (RFID), tags, systems, and methods. A discontinuous loop antenna is an antenna loop structure that includes a discontinuity portion. The discontinuous loop antenna can be coupled to an RFID chip to provide an RFID tag. The discontinuity portion decreases the loop inductance and tag capacitance, thus enabling the discontinuous loop antenna to have significantly larger loop area while still matching the chip impedance, resulting in dramatic increases in near-field sensitivity. Increased near-field sensitivity provides increased power harvesting efficiency during near-field coupling. As one non-limiting example, an RFID tag having a discontinuous loop antenna may achieve significantly more power harvesting from a RF signal than an RFID tag having a continuous loop antenna tuned to the same or similar resonant frequency. The discontinuity portion can be trimmed after fabrication allowing the resonant frequency of the RFID tag to be tuned.

### SUMMARY

The technical problem to be solved by the present invention is to provide an NFC antenna-integrated touch screen, a terminal and a near field communication thereof. The touch screen terminal having the NFC function may ensure smooth communication, and is suitable for the process of a narrow frame screen.

A touch screen terminal according to the present invention comprises an NFC antenna-integrated touch screen, as defined in appended claims.

According to the present invention, the ESD conductive wire of the touch screen is reused as the antenna for near field communication, and compatibility of the touch detection with the near field communication function is achieved with almost zero cost. Since there is only one turn of screen antenna, the screen antenna may be simply practiced and suitable for the design of narrow frame screen. Since the screen antenna is deployed on the substrate of the touch screen, and does not need to be disassembled, problems such as abrasion may be prevented and thus smooth near field communication may be ensured.

### BRIEF DESCRIPTION OF THE DRAWINGS

FIG. 1 is a structural principle diagram of a touch screen terminal having an NFC function according to an embodiment of the present invention;
FIG. 2A is a schematic design diagram of an NFC antenna-integrated touch screen according to a first embodiment of the present invention;
FIG. 2B is a schematic design diagram of an NFC antenna-integrated touch screen according to a second embodiment of the present invention;
FIG. 3A and FIG. 3B are two schematic diagrams of a gap shape of an annular line in FIG. 2B;
FIG. 4A is a schematic diagram of a structure of the near field communication manager and connection of the near field communication manager and a peripheral component according to the first embodiment of the present invention;
FIG. 4B is a schematic diagram of a structure of a near field communication manager and connection of the near field communication manager and a peripheral component according to an example;
FIG. 5A and FIG. 5B are schematic structural diagrams of an added ESD protection function in FIG. 4B; and
FIG. 6 is a working flowchart of a touch screen terminal having an NFC function according to an example.

### DETAILED DESCRIPTION

To make the objective, technical solution, and advantages of the present invention clearer, the following section describes the technical solutions of the present invention in combination with the accompanying drawings and embodiments. It should be understood that the embodiments described here are only exemplary ones for illustrating the present invention, and are not intended to limit the present invention.

According to the present invention, an outermost layer of electrostatic discharge (ESD) conductive wire of a touch screen is modified to reuse this winding of ESD conductive wire as a near field communication antenna; in addition, a near field communication processing circuit, also referred to as a near field communication manager, is deployed in a touch control chip to implement combination of the touch control technology and the near field communication technology.

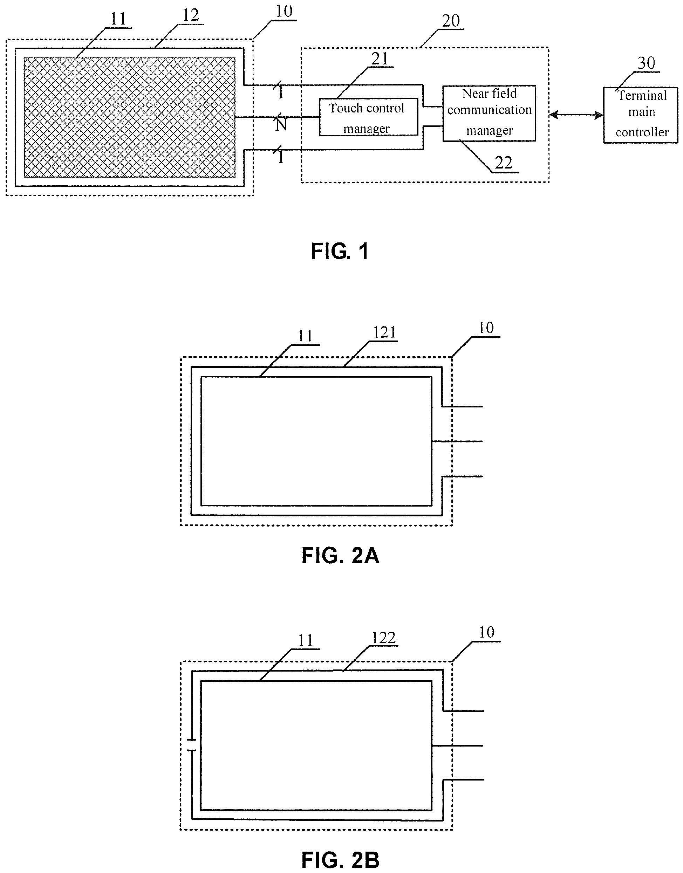

FIG. 1 illustrates structural principles of a touch screen terminal having an NFC function according to an embodiment of the present invention. For ease of description, only portions related to the present invention are illustrated. The touch screen terminal comprises a touch screen 10, a touch control chip 20 and a terminal main controller 30.

The touch screen 10 is an input device of a terminal device, and may be practiced by using a capacitive finger touch sensor screen and the like. In addition to sensing a touch operation performed by a finger, the touch screen provide the functions of signal reception and transmission in the near field communication, and mainly comprises a touch sensing region 11 and a screen antenna 12. The touch sensing region 11 is deployed with a touch sensing electrode pattern, which is generally practiced by using an indium tin oxide (ITO) electrode pattern. The touch sensing electrode pattern is formed by several transparent conductive driving sensing lines in a strip shape or other shapes, and is configured to sense a touch operation by the finger. The screen antenna 12 is a single-turn conductive wire (for example, a silver paste or other conductive materials) deployed on a periphery of the touch screen. The conductive wire is originally used as a ground loop for ESD protection is used, and the ground loop is herein reused to implement both reception and transmission of near field communication signals and the ESD protections. In additions, the single-turn conductive wire is favorable to the design of a narrow frame.

FIG. 2A illustrates a design structure of the touch screen 10 according to a first embodiment of the present invention. In this embodiment, the screen antenna 12 is a contiguous annular line 121 arranged on a periphery of the touch sensing region 11, and has a line width of 0.1 mm to 2.0 mm and a thickness of 18 µm to 100 µm. The contiguous annular line 121 may form a direct current loop, and the impedance at the two ends thereof is less than 200 ohms. The electrode pattern of the touch sensing region 11 may be practiced by the conventional design.

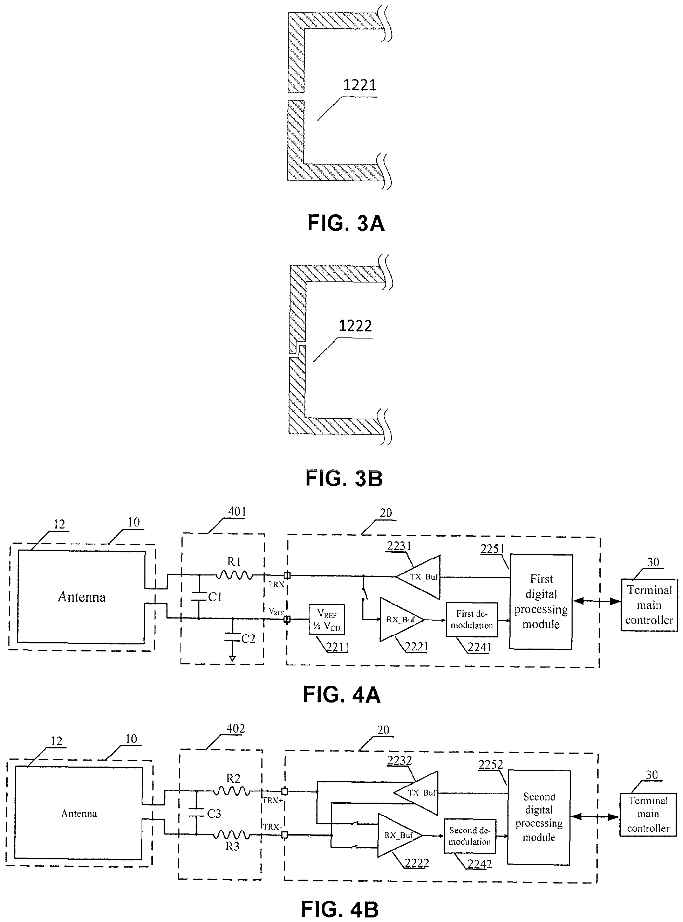

FIG. 2B is a design structure of the touch screen 10 according to a second embodiment of the present invention. In this embodiment, the screen antenna 12 is an intermediately disconnected annular line 122 arranged on a periphery of the touch sensing region 11. A gap at the disconnection of the annular line 122 is of a straight line shape as illustrated in FIG. 3A. The straight line shape is easy to practice in engineering design, and has a lower requirement on the process precision than a bent line. The intermediate disconnection has a spacing of 0.5 to 2 mm. This structure is disadvantageous in that a slit is present in the middle part, and ESD protection fails to be provided for this part. In addition, the annular line 122 may also be a bent line shape as illustrated in FIG. 3B. The difficulty of such disconnected bent line is greater than the difficulty of the disconnected straight line in terms of practice and engineering design, and the requirement on the process precision is higher. The bent line has a spacing of 0.2 to 1 mm, and is advantageous in that no blind region in ESD protection exists. Although the annular line 122 is intermediately disconnected and no direct current loop is formed, an alternating current impedance of the annular line 122 is the same as that in the first embodiment, which is less than 200 ohms, with the same line width of 0.1 to 2.0 mm and a thickness of 18 to 100 µm.

Further referring to FIG. 1, the touch control chip 20 comprises a touch control manager 21 and a near field communication manager 22; wherein the touch control manager 21 is connected to the touch sensing electrode pattern, and configured to process a sensing signal from the touch control sensing electrode pattern and calculate a touch coordinate. The near field communication manager 22 is connected to two terminals of the screen antenna, and configured to process a near field communication transaction. The terminal main controller 30 is configured to process most of the transactions of the terminal, and is also configured to acquire and manage information of touch control and near field communication.

FIG. 4A illustrates a structure of the near field communication manager 22 and connection of the near field communication manager 22 and a peripheral component according to the first embodiment of the present invention. In this embodiment, the near field communication manager 22 comprises a reference voltage module 2211, a first reception buffering module 2221, a first sending module 2231, a first demodulation module 2241 and a first digital processing module 2251. A reference voltage output terminal of the reference voltage module 2211 is electrically connected to the screen antenna 12, and provides a reference voltage and a bias for an interior and an exterior of the touch control chip 20. The voltage of the reference voltage module may be half of the voltage of the power source or may be another voltage, for example, 1/3 to 2/3 of the voltage of the power source. An input terminal of the first reception buffering module 2221 is electrically connected to the screen antenna 12, and is mainly configured to buffer and amplify an external input signal. The signal is input via a single terminal. The input terminal of the first reception buffering module 2221 may also be electrically connected to the screen antenna 12 via a switch unit. When the sending module 2231 works, the switch unit before the first reception buffering module 2221 is switched off, to prevent the first sending module 2231 from interfering a working bias state of the first reception buffering module 2221. When the first sending module 2231 is idle, the switch unit before the first reception buffering module 2221 is switched on, to facilitate reception and processing of the screen antenna signal. An output terminal of the first sending module 2231 is electrically connected to the screen antenna 12, and is configured to send out, via the screen antenna 12, a near field communication signal to be transmitted, which is a single-terminal output buffer having a specific driving capability and capable of outputting a modulated 13.56 MHz square wave. When the first sending module 2231 is idle, the first sending module may enter a high impedance state, to prevent the input signal from being bypassed, and ensure that the first reception buffering module 2221 is capable of working in a normal bias state. An input terminal of the first demodulation module 2241 is connected to the first reception buffering module 2221, and is configured to demodulate the signal coupled by the screen antenna (that is, the screen antenna 12) and then processed by the first reception buffering module 2221, thereby completing the task of demodulation from a radio frequency field to a digital signal. A first digital processing module 2251, with one terminal being connected to an output terminal of the first demodulation module 2241 and an input terminal of the first sending module 2231, and the other terminal being connected to the terminal main controller 30, is configured to decode the digital signal obtained via demodulation by the first demodulation module 2241, and send a decoding result to the terminal main controller 30. Moreover, the first digital processing module 2251 is further configured to receive data to be sent from the terminal main controller 30 and demodulate the received data, and output a signal upon modulation to the first sending module 2231.

Further, in this embodiment, the touch screen terminal further comprises a first filter module 401, wherein the screen antenna 12 is connected to the near field communication manager 22 via the first filter module 401. The first filter module 401 is configured to perform anti-electromagnetic interference (EMI) filter and impedance matching for a near field communication signal received and sent by the screen antenna 12, and comprises a first resistor R1, a first capacitor C1 and a second capacitor C2. One line terminal of the screen antenna 12 is electrically connected to the first reception buffering module 2221 and the first sending module 2231 via the first resistor R1, and the other line terminal of the screen antenna 12 is connected to the reference voltage output terminal of the reference voltage module 2221; the first capacitor C1 is connected between the two terminals of the screen antenna 12, and the second capacitor C2 is connected between the other line terminal of the screen antenna 12 and the ground.

FIG. 4B illustrates a structure of the near field communication manager 22 and connection of the near field communication manager 22 and a peripheral component according to an example. In this embodiment, the near field communication manager 22 comprises a second reception buffering module 2222, a second sending module 2232, a second demodulation module 2242 and a second digital processing module 2252. The second reception buffering module 2222 is configured to buffer and amplify an external near field communication signal received by the screen antenna 12. The signal is input to the second reception buffering module 2222 in a differential manner, and the two input terminals of the second reception buffering module 2222 are respectively electrically connected to the two terminals of the screen antenna 12 via switch units. Two output terminals of the second sending module 2232 are respectively electrically connected to the two terminals, and the second sending module 2232 is configured to send out, via the screen antenna 12, a near field communication antenna to be output. During operation, the signals output by the two output terminals have opposite levels. To be specific, the second sending module 2232 is an output buffer having a specific driving capability. When the second sending module 2232 is idle, the second sending module may enter a high impedance state, to prevent the input signal from being bypassed, and ensure that the second reception buffering module 2222 is capable of working in a normal bias state. The second sending module 2232 outputs signals in a differential manner. To be specific, when a signal is output, if one terminal of the second sending module 2232 is a high level, the other terminal is a low level; when the second sending module 2232 is idle, the two terminals thereof both output high impedance. When the second sending module 2232 is idle, the switch unit before the second reception receiving module 2222 is switched off, to prevent the second sending module 2232 from interfering the working bias state of the second reception buffering module 2222; and when the second sending module 2232 is idle, the switch unit before the second reception buffering module 2222 is switched on, to facilitate reception and processing of the screen antenna signal.

An input terminal of the second demodulation module 2242 is connected to the second reception buffering module 2222, and is configured to demodulate the signal amplified by the second reception buffering module 2222 into a digital signal, to complete the task of demodulation from a radio frequency field to a digital signal. A second digital processing module 2252, with one terminal being connected to an output terminal of the second demodulation module 2242 and an input terminal of the second sending module 2232, and the other terminal being connected to the terminal main controller 30, is configured to decode the digital signal obtained via demodulation by the second demodulation module 2242, and send a decoding result to the terminal main controller 30. Moreover, the second digital processing module 2252 is further configured to receive data to be sent from the terminal main controller 30 and demodulate the received data, and output a signal upon modulation to the second sending module 2232.

Further, in this example, the touch screen terminal further comprises a second filter module 402, wherein the screen antenna 12 is connected to the near field communication manager 22 via the second filter module 402. The second filter module 402 is configured to perform EMI filter and impedance matching for a near field communication signal received and sent by the screen antenna 12, and comprises a second resistor R2, a third resistor R3 and a third capacitor C3. One line terminal of the screen antenna 12 is electrically connected to the second reception buffering module 2222 and the second sending module 2232 via the second resistor R2, and the other line terminal of the screen antenna 12 is connected to the second reception buffering module 2222 and the second sending module 2232 via the third resistor R3; the third capacitor C3 is connected between the two terminals of the screen antenna 12.

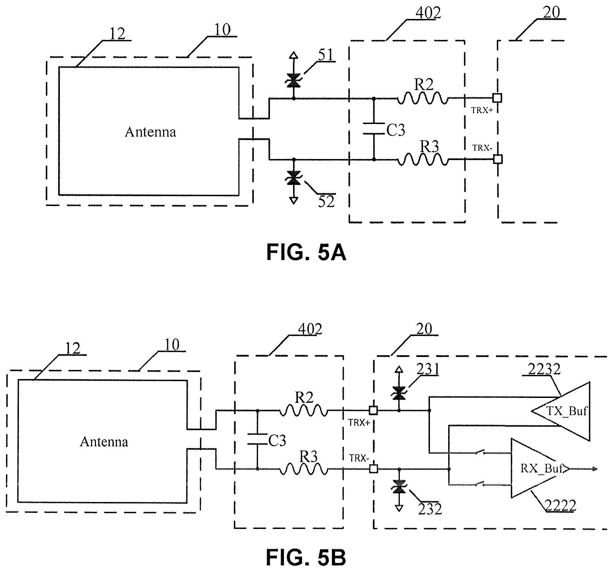

Further, as illustrated in FIG. 4B, an ESD protection function may be configured in the near field communication manager 22. As illustrated in FIG. 5A and FIG. 5B, the two manners are detailed as follows: in FIG. 5A, two ESD protective diodes 51 and 52 are respectively connected to the two terminals at the interface of the screen antenna and then connected to the ground line, thereby forming ESD protection and ensuring that the touch control chip circuit is more secure. Based on the touch control chip circuit, two devices are added, which thus increases the cost and occupy the circuit area. The advantage of this circuit lies in a better protection effect over that in FIG. 5B. As illustrated in FIG. 5B, two ESD protective circuits 231 and 232 are directly integrated in the touch control chip, to form ESD protection and ensure that the internal circuit of the chip is more secure. To be specific, the ESD protective circuit 231 is connected between an output terminal of the second sending module 2232 and the ground, and the ESD protective circuit 232 is connected between the other output terminal of the second sending module 2232 and the ground. The ESD protective circuit achieves a very limited ESD protection effect and the cost of the chip is slightly increased. The advantage thereof lies in that the peripheral circuit is simple and the circuit area becomes smaller.

As illustrated in FIG. 4A, similarly, the ESD protection function is configured in the interior or the exterior of the touch control chip 20. That is, when the ESD protection function is configured in the exterior of the chip, each of the two terminals of the screen antenna is connected to the ground via an ESD protective diode; and when the ESD protection function is configured in the interior of the chip, the reference voltage output terminals of the reference voltage module 2211 is connected to the ground via an ESD protective diode, and the output terminal of the first sending module 2231 is connected to the ground via another ESD protection diode.

Referring to the structures of the near field communication manager as illustrated in FIG. 4A and FIG. 4B, since the conventional near field communication antenna is ideal, the signal does not need to be amplified. In addition, the signal is returned back to a card reader by means of regulating the power consumption load of the near field communication manager. However, the single-turn antenna according to the present invention has a great impedance and weak signal, and thus amplification is needed. If the signal needs to be returned back by means of regulating the load, after the display screen absorbs the energy, the returned signal is also very weak. Therefore, the two problems that the wiring impedance of the single-turn silver paste is great and that the attenuation caused by the terminal display screen and the like elements to the communication signal is great, are solved by means of amplifying a signal and actively sending a driving signal by the reception buffering module in the circuitry.

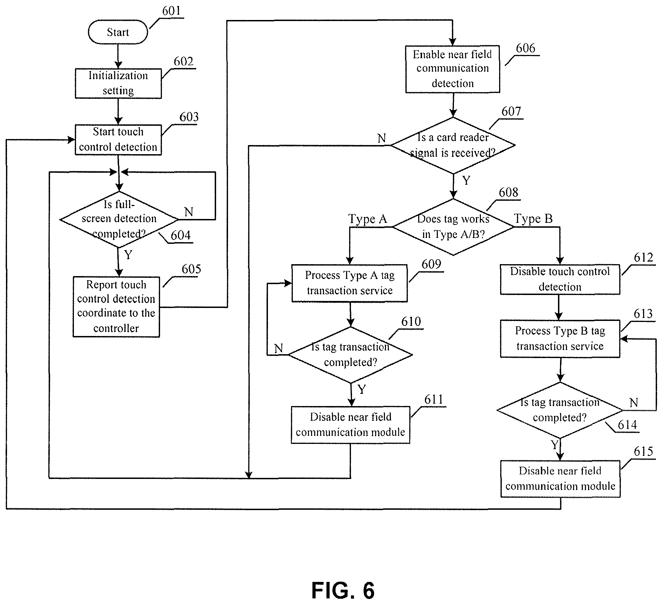

FIG. 6 illustrates a working process of a touch screen terminal having the NFC function according to an example. The process mainly comprises touch control detection steps and near field communication detection steps. In the touch control detection steps, the touch control manager 21 detects whether a touch control operation is performed on the touch screen 10, and sends the calculated touch coordinate to the terminal main controller 30. In the near field communication detection steps, the touch control manager 22 performs a full-screen detection and then starts performing the near field communication detection.

Step 601: the main program of the touch control chip is started.

Step 602: settings of the related register are initialized, for example, timer, I/O state and the like of the terminal main controller 30.

Step 603: touch control detection is enabled; the related register and the related interrupt program are properly set, to enable the touch control detection process run automatically.

Step 604: it is judged whether a full-screen scanning of touch control is completed; and if the full-screen scanning is not completed, a period of time later, it is continuously judged whether the full-screen scanning is completed.

Step 605: if a full-screen touch control scanning is completed, coordinate information detected by the touch control is calculated based on the scanned data, and the coordinate information is reported to the terminal main controller 30.

Step 606: the near field communication detection module is enabled after step 605, to receive a 13.56 MHz magnetic field signal from a card reader.

Step 607: it is judged whether the 13.56 MHz magnetic field signal is received from the card reader; and if no such signal is received, the process directly returns to step 604, and a next run of touch control coordinate judgment is made.

Step 608: if the 13.56 MHz magnetic field signal is received from the card reader, it is further judged whether the state set for the current RFID tag is a Type A (first state) or Type B (second state). The RFID tag comprises a near field communication manager and a screen antenna. In the example, the difference between Type A state and Type B state lies in that: the modulation signals corresponding to Type A have a 100% depth and are very strong, and reception and modulation of Type A signals are not easily subjected to the interference caused by the touch screen scanning signal, and thus the touch control detection does not need to be disabled; whereas the modulation signals corresponding to Type B signals have only a 10% depth, and reception and modulation of Type B signals are not easily subjected to the interference caused by the touch screen scanning signal, and thus the touch control detection needs to be disabled to eliminate the interference.

Step 609: if the currently set state is Type A, the process enters Type A tag transaction service, for example, completion of a Type A process of ISO14443-3 and the like.

Step 610: it is judged whether the current transaction is completed; and if not completed, the process goes to step 609 (in the case where the magnetic field of the card reader is not disabled and the command is not suspended).

Step 611: if the current transaction is completed (in the case where the magnetic field of the card reader is disabled), the near field communication is disabled to save energy; and the process directly returns to step 604 to perform a next run of touch coordinate judgment.

Step 612: if the currently set state is Type B, the touch control signal is firstly disabled to prevent the mutual interference between a touch control signal and a near field communication signal.

Step 613: the process enters the Type B tag transaction service, for example, completion of a Type B process of ISO14443-3 and the like.

Step 614: it is judged whether the current transaction is completed; and if not completed, the process goes to step 613 (in the case where the magnetic field of the card reader is not disabled and the command is not suspended).

Step 615: if the current transaction is completed (in the case where the magnetic field of the card reader is disabled), the near field communication is disabled to save energy; and the process directly returns to step 603 and the touch control detection is enabled, to perform a next run of touch coordinate judgment.

After two functions are enabled, if not disabled, the two functions run parallelly and data is generated in a space of a register. The terminal main controller 30 is responsible for perform operational processing for the data.

In conclusion, according to the present invention, the ESD conductive wire of the touch screen is reused as the antenna for near field communication, and compatibility of the touch detection with the near field communication function is achieved with almost zero cost. Since there is only one turn of screen antenna, the screen antenna may be simply practiced and suitable for the design of narrow frame screen. Since the screen antenna is deployed on the substrate of the touch screen, and does not need to be disassembled, problems such as abrasion may be prevented and thus smooth near field communication may be ensured. In addition, the two problems that the wiring impedance of the single-turn silver slurry is great and that the attenuation caused by the terminal display screen and the like elements to the communication signal is great are solved by means of amplifying a signal and actively sending a driving signal by the reception buffering module. The present invention is mainly applicable to data exchange, financial transaction, access control management and the like scenarios.

Described above are merely preferred embodiments of the present invention, but are not intended to limit the present invention. Any modification or improvement made without departing from the principle of the present invention should fall within the protection scope of the present invention defined in the appended claims.

## Claims

1. A touch screen terminal, comprising a near field communication, NFC, antenna-integrated touch screen (10),
wherein the NFC antenna-integrated touch screen (10) comprises:
a substrate having a touch sensing region (11);
a touch sensing electrode pattern arranged in the touch sensing region (11); and
a single-turn conductive wire (12) configured as a ground loop of electrostatic discharge, ESD, conductive wire, arranged on a periphery of the touch sensing region (11),
wherein the single-turn conductive wire (12) is not in contact with the touch sensing region (11) and configured to form a screen antenna (12) for near field communication;
and the touch screen terminal further comprising a touch control chip (20) and a terminal main controller (30); wherein:
the touch control chip (20) comprises a touch control manager (21) and a near field communication manager (22); wherein the touch control manager (21) is connected to the touch sensing electrode pattern, and configured to process a sensing signal from the touch sensing electrode pattern and calculate a touch coordinate; and the near field communication manager (22) is connected to the screen antenna (12), and configured to process a near field communication transaction; and
the terminal main controller (30) is configured to acquire and manage information of the touch control and near field communication;
wherein the near field communication manager (22) comprises:
a reference voltage module (2211) with a reference voltage output terminal thereof being electrically connected to the screen antenna (12), the reference voltage module (2211) being configured to provide a reference voltage and a bias for an interior and an exterior of the touch control chip (20);
a first reception buffering module (2221) with an input terminal thereof being electrically connected to the screen antenna (12), the first reception buffering module (2221) being configured to buffer and amplify an external near field communication signal received by the screen antenna (12);
a first sending module (2231) with an output terminal being electrically connected to the screen antenna (12), the first sending module (2231) being configured to send out, via the screen antenna (12), a near field communication signal to be output;
a first demodulation module (2241) with an input terminal thereof being electrically connected to the first reception buffering module (2221), the first demodulation module (2241) being configured to demodulate the signal amplified by the first reception buffering module (2221) into a digital signal; and
a first digital processing module (2251) with one terminal being connected to an output terminal of the first demodulation module (2241) and an input terminal of the first sending module (2231), and the other terminal being connected to the terminal main controller (30), wherein the first digital processing module (2251) is configured to decode the digital signal obtained via demodulation by the first demodulation module (2241), and send a decoding result to the terminal main controller (30); and is further configured to receive data to be sent from the terminal main controller (30) and demodulate the received data, and output a signal upon modulation to the first sending module (2231);
wherein the touch screen terminal further comprises ESD protective diodes (51, 52, 231, 232), wherein each of the two terminals of the screen antenna (12) is respectively connected to a ground via one of the ESD protective diodes (51, 52, 231, 232).

2. The touch screen terminal according to claim 1, wherein the screen antenna (12) is a contiguous annular line (121) or an intermediately disconnected annular line (122) surrounding the periphery of the touch sensing region (11), wherein when the screen antenna (12) is an intermediately disconnected annular line (122), a gap at the disconnection is a straight line shape or a bent line shape, and two terminals of the screen antenna (12) are connected to the near field communication manager (22).

3. The touch screen terminal according to claim 2, wherein the screen antenna (12) has a line width of 0.1 to 2.0 mm, a thickness of 18 to 100 µm and an impedance of less than 200 ohms.

4. The touch screen terminal according to claim 1, wherein the input terminal of the first reception buffering module (2221) is electrically connected to the screen antenna (12) via a switch unit; the touch screen terminal being configured such that, when the first reception buffering module (2221) operates, the switch unit is switched on; and when the first sending module (2231) operates, the switch unit is switched off.

5. The touch screen terminal according to claim 4, wherein if the first sending module (2231) is idle, the output terminal thereof stays in a high-impedance state.

6. The touch screen terminal according to claim 1 or 4, wherein the touch screen terminal further comprises a first filter module (401), and the screen antenna (12) is connected to the near field communication manager (22) via the first filter module (401);
wherein the first filter module (401) is configured to perform anti-electromagnetic interference filter and/or impedance matching for a near field communication signal received and sent by the screen antenna (12), and the first filter module (401) comprises a first resistor (R1), a first capacitor (C1) and a second capacitor (C2), wherein one terminal of the screen antenna (12) is electrically connected to the first reception buffering module (2221) and the first sending module (2231) via the first resistor (R1), and the other terminal of the screen antenna (12) is connected to the reference voltage output terminal of the reference voltage module (2211), the first capacitor (C1) is connected between the two terminals of the screen antenna (12), and the second capacitor (C2) is connected between the other line terminal of the screen antenna (12) and the ground.

7. The touch screen terminal according to claim 6, wherein the reference voltage output terminal of the reference voltage module (2211) is connected to the ground via the ESD protective diode (232), and the output terminal of the first sending module (2231) is connected to the ground via the another ESD protective diode (231).

## Patentansprüche

1. Berührungsempfindliches Bildschirm-Endgerät, umfassend einen Nahfeldkommunikation-, NFC, Antennen-integrierten berührungsempfindlichen Bildschirm (10),
wobei der NFC-Antenne-integrierte berührungsempfindliche Bildschirm (10) umfasst:
ein Substrat mit einem Berührungserfassungsbereich (11);
ein Berührungserfassungselektrodenmuster, das in dem Berührungserfassungsbereich (11) angeordnet ist; und
einen leitenden Draht (12) mit einer Windung, der als Erdungsschleife eines leitenden Drahtes zur elektrostatischen Entladung, ESD, konfiguriert ist und an einem Umfang des Berührungserfassungsbereichs (11) angeordnet ist;
wobei der leitende Draht (12) mit einer Windung keinen Kontakt mit dem Berührungserfassungsbereich (11) hat und konfiguriert ist, um eine Bildschirmantenne (12) für Nahfeldkommunikation zu bilden;
und das berührungsempfindliche Bildschirm-Endgerät ferner einen Berührungssteuerchip (20) und ein Endgerät-Hauptsteuergerät (30) umfasst; wobei
der Berührungssteuerchip (20) einen Berührungssteuerungsmanager (21) und einen Nahfeldkommunikationsmanager (22) umfasst; wobei der Berührungssteuerungsmanager (21) mit dem Berührungserfassungselektrodenmuster verbunden und konfiguriert ist, um ein Erfassungssignal von dem Berührungserfassungselektrodenmuster zu verarbeiten und eine Berührungskoordinate zu berechnen; und der Nahfeldkommunikationsmanager (22) mit der Bildschirmantenne (12) verbunden und konfiguriert ist, um eine Nahfeldkommunikationstransaktion zu verarbeiten; und
das Endgerät-Hauptsteuergerät (30) konfiguriert ist, um Informationen der Berührungssteuerung und Nahfeldkommunikation zu erfassen und zu verwalten;
wobei der Nahfeldkommunikationsmanager (22) umfasst:
ein Referenzspannungsmodul (2211) mit einem Referenzspannungsausgangsanschluss, der elektrisch mit der Bildschirmantenne (12) verbunden ist, wobei das Referenzspannungsmodul (2211) konfiguriert ist, um eine Referenzspannung und eine Vorspannung für einen Innenbereich und einen Außenbereich des Berührungssteuerchip (20) bereitzustellen;
ein erstes Empfangspuffermodul (2221) mit einem Eingangsanschluss, der elektrisch mit der Bildschirmantenne (12) verbunden ist, wobei das erste Empfangspuffermodul (2221) konfiguriert ist, um ein externes Nahfeldkommunikationssignal, das von der Bildschirmantenne (12) empfangen wird, zu puffern und zu verstärken;
ein erstes Sendemodul (2231) mit einem Ausgangsanschluss, der elektrisch mit der Bildschirmantenne (12) verbunden ist, wobei das erste Sendemodul (2231) konfiguriert ist, um über die Bildschirmantenne (12) ein auszugebendes Nahfeldkommunikationssignal auszusenden; ein erstes Demodulationsmodul (2241) mit einem Eingangsanschluss, der elektrisch mit dem ersten Empfangspuffermodul (2221) verbunden ist, wobei das erste Demodulationsmodul (2241) konfiguriert ist, um das durch das erste Empfangspuffermodul (2221) verstärkte Signal in ein Digitalsignal zu demodulieren; und
ein erstes digitales Verarbeitungsmodul (2251) mit einem Anschluss, der mit einem Ausgangsanschluss des ersten Demodulationsmoduls (2241) und einem Eingangsanschluss des ersten Sendemoduls (2231) verbunden ist, und dem anderen Anschluss, der mit dem Endgerät-Hauptsteuergerät (30) verbunden ist, wobei das erste digitale Verarbeitungsmodul (2251) konfiguriert ist, um das durch Demodulation durch das erste Demodulationsmodul (2241) erhaltene digitale Signal zu decodieren und ein Decodierungsergebnis an das Endgerät-Hauptsteuergerät (30) zu senden; und ferner konfiguriert ist, um Daten zu empfangen, die von dem Endgerät-Hauptsteuergerät (30) zu senden sind, und die empfangenen Daten zu demodulieren und ein Signal bei Modulation an das erste Sendemodul (2231) auszugeben; wobei das berührungsempfindliche Bildschirm-Endgerät ferner ESD-Schutzdioden (51, 52, 231, 232) umfasst, wobei jeder der beiden Anschlüsse der Bildschirmantenne (12) jeweils über eine der ESD-Schutzdioden (51, 52, 231, 232) mit einer Masse verbunden ist.

2. Berührungsempfindliches Bildschirm-Endgerät nach Anspruch 1, wobei die Bildschirmantenne (12) eine zusammenhängende Ringleitung (121) oder eine intermediär getrennte Ringleitung (122) ist, die den Umfang des Berührungserfassungsbereichs (11) umgibt, wobei, wenn die Bildschirmantenne (12) eine intermediär getrennte Ringleitung (122) ist, ein Spalt an der Trennung eine gerade Linienform oder eine gebogene Linienform aufweist und zwei Anschlüsse der Bildschirmantenne (12) mit dem Nahfeldkommunikationsmanager (22) verbunden sind.

3. Berührungsempfindliches Bildschirm-Endgerät nach Anspruch 2, wobei die Bildschirmantenne (12) eine Linienbreite von 0,1 bis 2,0 mm, eine Dicke von 18 bis 100 µm und eine Impedanz von weniger als 200 Ohm aufweist.

4. Berührungsempfindliches Bildschirm-Endgerät nach Anspruch 1, wobei der Eingangsanschluss des ersten Empfangspuffermoduls (2221) über eine Schalteinheit elektrisch mit der Bildschirmantenne (12) verbunden ist; wobei das berührungsempfindliche Bildschirm-Endgerät so konfiguriert ist, dass beim Betrieb des ersten Empfangspuffermoduls (2221) die Schalteinheit eingeschaltet wird; und wenn das erste Sendemodul (2231) arbeitet, die Schalteinheit ausgeschaltet wird.

5. Berührungsempfindliches Bildschirm-Endgerät nach Anspruch 4, wobei, wenn das erste Sendemodul (2231) im Leerlauf ist, dessen Ausgangsanschluss in einem Hochimpedanz-Zustand bleibt.

6. Berührungsempfindliches Bildschirm-Endgerät nach Anspruch 1 oder 4, wobei das Berührungsbildschirm-Endgerät ferner ein erstes Filtermodul (401) umfasst und die Bildschirmantenne (12) über das erste Filtermodul (401) mit dem Nahfeldkommunikationsmanager (22) verbunden ist;
wobei das erste Filtermodul (401) konfiguriert ist, um eine Anti-elektromagnetische-Störung-Filterung und/oder eine Impedanzanpassung für ein Nahfeldkommunikationssignal durchzuführen, das von der Bildschirmantenne (12) empfangen und gesendet wird, und das erste Filtermodul (401) einen ersten Widerstand (R1), einen ersten Kondensator (C1) und einen zweiten Kondensator (C2) umfasst, wobei ein Anschluss der Bildschirmantenne (12) elektrisch mit dem ersten Empfangspuffermodul (2221) und dem ersten Sendemodul (2231) über den ersten Widerstand (R1) verbunden ist und der andere Anschluss der Bildschirmantenne (12) mit dem Referenzspannungsausgangsanschluss des Referenzspannungsmoduls (2211) verbunden ist, wobei der erste Kondensator (C1) zwischen den beiden Anschlüssen der Bildschirmantenne (12) geschaltet ist und der zweite Kondensator (C2) zwischen dem anderen Leitungsanschluss der Bildschirmantenne (12) und der Masse geschaltet ist.

7. Berührungsempfindliches Bildschirm-Endgerät nach Anspruch 6, wobei der Referenzspannungsausgangsanschluss des Referenzspannungsmoduls (2211) über die ESD-Schutzdiode (232) mit der Masse verbunden ist und der Ausgangsanschluss des ersten Sendemoduls (2231) über die andere ESD-Schutzdiode (231) mit der Masse verbunden ist.

## Revendications

1. Terminal à écran tactile, comprenant un écran tactile (10) intégré à une antenne de communication en champ proche, NFC,
dans lequel l'écran tactile (10) intégré à une antenne NFC comprend :
un substrat ayant une région de détection tactile (11);
un motif d'électrode de détection tactile agencé dans la région de détection tactile (11); et
un fil conducteur à un seul tour (12) configuré en tant que boucle de masse de fil conducteur à décharge électrostatique, ESD, agencé sur une périphérie de la région de détection tactile (11),
dans lequel le fil conducteur à un seul tour (12) n'est pas en contact avec la région de détection tactile (11) et configuré pour former une antenne d'écran (12) pour une communication en champ proche ;
et le terminal à écran tactile comprenant en outre une puce de commande tactile (20) et une unité de commande principale de terminal (30) ; où :
la puce de commande tactile (20) comprend un gestionnaire de commande tactile (21) et un gestionnaire de communication en champ proche (22); où le gestionnaire de commande tactile (21) est connecté au motif d'électrode de détection tactile, et configuré pour traiter un signal de détection provenant du motif d'électrode de détection tactile et pour calculer une coordonnée tactile ; et le gestionnaire de communication en champ proche (22) est connecté à l'antenne d'écran (12), et configuré pour traiter une transaction de communication en champ proche ; et
l'unité de commande principale de terminal (30) est configurée pour acquérir et gérer des informations de la commande tactile et de la communication en champ proche ;
dans lequel le gestionnaire de communication en champ proche (22) comprend :
un module de tension de référence (2211) avec une borne de sortie de tension de référence de celui-ci électriquement connectée à l'antenne d'écran (12), le module de tension de référence (2211) étant configuré pour fournir une tension de référence et une polarisation pour un intérieur et un extérieur de la puce de commande tactile (20) ;
un premier module de mise en mémoire tampon de réception (2221) avec une borne d'entrée de celui-ci électriquement connectée à l'antenne d'écran (12), le premier module de mise en mémoire tampon de réception (2221) étant configuré pour mettre en mémoire tampon et amplifier un signal de communication en champ proche externe reçu par l'antenne d'écran (12) ;
un premier module d'envoi (2231) avec une borne de sortie électriquement connectée à l'antenne d'écran (12), le premier module d'envoi (2231) étant configuré pour envoyer, via l'antenne d'écran (12), un signal de communication en champ proche à délivrer en sortie ;
un premier module de démodulation (2241) avec une borne d'entrée de celui-ci électriquement connectée au premier module de mise en mémoire tampon de réception (2221), le premier module de démodulation (2241) étant configuré pour démoduler le signal amplifié par le premier module de mise en mémoire tampon de réception (2221) en un signal numérique ; et
un premier module de traitement numérique (2251) avec une borne connectée à une borne de sortie du premier module de démodulation (2241) et à une borne d'entrée du premier module d'envoi (2231), et l'autre borne connectée à l'unité de commande principale de terminal (30), où le premier module de traitement numérique (2251) est configuré pour décoder le signal numérique obtenu par démodulation par le premier module de démodulation (2241), et pour envoyer un résultat de décodage à l'unité de commande principale de terminal (30) ; et est en outre configuré pour recevoir des données à envoyer à partir de l'unité de commande principale de terminal (30) et pour démoduler les données reçues, et pour délivrer en sortie un signal lors de la modulation au premier module d'envoi (2231) ;
dans lequel le terminal à écran tactile comprend en outre des diodes de protection ESD (51, 52, 231, 232), où chacune des deux bornes de l'antenne d'écran (12) est respectivement connectée à une masse via l'une des diodes de protection ESD (51, 52, 231, 232).

2. Terminal à écran tactile selon la revendication 1, dans lequel l'antenne d'écran (12) est une ligne annulaire contiguë (121) ou une ligne annulaire temporairement déconnectée (122) entourant la périphérie de la région de détection tactile (11), où, lorsque l'antenne d'écran (12) est une ligne annulaire temporairement déconnectée (122), un espace au niveau de la déconnexion est une forme de ligne droite ou une forme de ligne courbée, et deux bornes de l'antenne d'écran (12) sont connectées au gestionnaire de communication en champ proche (22).

3. Terminal à écran tactile selon la revendication 2, dans lequel l'antenne d'écran (12) a une largeur de ligne comprise entre 0,1 et 2,0 mm, une épaisseur comprise entre 18 et 100 µm et une impédance inférieure à 200 ohms.

4. Terminal à écran tactile selon la revendication 1, dans lequel la borne d'entrée du premier module de mise en mémoire tampon de réception (2221) est électriquement connectée à l'antenne d'écran (12) via une unité de commutation ; le terminal à écran tactile étant configuré de sorte que, lorsque le premier module de mise en mémoire tampon de réception (2221) fonctionne, l'unité de commutation soit activée ; et, lorsque le premier module d'envoi (2231) fonctionne, l'unité de commutation soit désactivée.

5. Terminal à écran tactile selon la revendication 4, dans lequel, si le premier module d'envoi (2231) est inactif, sa borne de sortie reste dans un état de haute impédance.

6. Terminal à écran tactile selon la revendication 1 ou 4, dans lequel le terminal à écran tactile comprend en outre un premier module de filtre (401), et l'antenne d'écran (12) est connectée au gestionnaire de communication en champ proche (22) via le premier module de filtre (401) ;
dans lequel le premier module de filtre (401) est configuré pour réaliser un filtre d'interférence anti-électromagnétique et/ou une adaptation d'impédance pour un signal de communication en champ proche reçu et envoyé par l'antenne d'écran (12), et le premier module de filtre (401) comprend une première résistance (R1), un premier condensateur (C1) et un deuxième condensateur (C2), où une borne de l'antenne d'écran (12) est électriquement connectée au premier module de mise en mémoire tampon de réception (2221) et au premier module d'envoi (2231) via la première résistance (R1) et l'autre borne de l'antenne écran (12) est connectée à la borne de sortie de tension de référence du module de tension de référence (2211), le premier condensateur (C1) est connecté entre les deux bornes de l'antenne d'écran (12), et le deuxième condensateur (C2) est connecté entre l'autre borne de ligne de l'antenne d'écran (12) et la masse.

7. Terminal à écran tactile selon la revendication 6, dans lequel la borne de sortie de tension de référence du module de tension de référence (2211) est connectée à la masse via la diode de protection ESD (232), et la borne de sortie du premier module d'envoi (2231) est connectée à la masse via l'autre diode de protection ESD (231).
